# EUROPEAN PATENT SPECIFICATION

(11) **EP 0 317 086 B1**
(45) Date of publication and mention of the grant of the patent: **14.12.1994**
(21) Application number: 88309905.3
(22) Date of filing: 21.10.1988
(51) Int. Cl.: B60R 13/06

(54) **Edge trim and method of fitting**
Kantenabdeckung und deren Einbauverfahren
Moulure de protection et procédé d'installation

(30) Priority: 22.10.1987 GB 8724773
(43) Date of publication of application: 24.05.1989
(73) Proprietor: SCHLEGEL (UK) HOLDINGS LIMITED, Seacroft Leeds, LS14 1LY (GB)
(72) Inventor: Ray, Michael James, Twycross Leicestershire (GB); Lister, David H., Loughborough Leicestershire (GB); Castle, Robert, Hinckley Leicestershire (GB)
(74) Representative: Carpmael, John William Maurice

(56) References cited:
- EP-A- 0 233 552
- DE-U- 8 204 475
- DE-U- 8 604 761
- GB-A- 1 020 026
- GB-A- 1 588 213
- GB-A- 2 024 294
- US-A- 4 311 747

## Description

This invention relates to a method of, and apparatus for fitting an edge trim to a flange around a door or door opening on a motor vehicle. The invention is also applicable to weatherstrips mounted on or integral with such edge trims.

Edge trims for use in the motor industry are normally extruded from a synthetic resinous material and incorporate a metallic carrier therein, the carrier being of slotted metal construction or knitted zig-zag wire construction so as to impart rigidity and resilience to the edge trim. Very often, a pile or elastomeric seal is extruded with or attached to the edge trim. Normally, the edge trim either with or without a weatherstrip is supplied to the motor vehicle manufacturer in long reeled lengths ready for application to a flange around the door or boot or frame of the door or boot of a vehicle in a state ready to be fitted to the flange, i.e. such that it has a generally U-shaped cross-section, the internal configuration of the U being such that the edge trim can be applied to the flange relatively easily either manually or with a machine and will not subsequently become displaced from the flange.

There has always been a problem with the fitting of such U-shaped edge trims whether or not they incorporate a weatherstrip because of the manufacturing tolerances both of the edge trim and the motor vehicle itself. For example, the thickness of the metal carrier can vary slightly as can the thickness of the elastomeric material of the extrusion and the dimensions of any gripper fins provided on the inner surfaces of the U-shape. Furthermore, the flange to which the edge trim is fitted can have a thickness made up of one, two, or even more layers of sheet metal welded together with spot welds which themselves can change the thickness of the flange. In practice, therefore, it is difficult for a fitter or a machine to apply a U-shaped edge trim to a flange in such a way that it will remain on the flange during the life of the vehicle. The problem of course is that for a single layer thickness of metal sheet, the internal dimensions of the U-shaped edge trim need to be considerably less than for that portion of the flange which is made up of say three layers of metal sheet. If the edge trim is pre-formed into its U-shape to accommodate all these different thicknesses, it is likely to be slightly too wide for single layer thicknesses and slightly too narrow for three or more layer thicknesses and as a result, the edge trim may not form a satisfactory grip where the flange is of one layer thickness, and where the flange is of more than two layer thickness it may be extremely difficult for the fitter or machine or apply the edge trim to the flange, and as a result the edge trim is abused during fitting and does not perform satisfactorily in use.

The present invention has been conceived to overcome the above problems and also to take advantage of the ever increasing use of robotics in the manufacture of motor vehicles.

DE-U-8604761 discloses a traditional construction of edge trim or strip structure, having a special construction of flange gripping projections, which is initially extruded in a slightly splayed arrangement, otherwise extrusion of the polymer is not possible, and is then, after curing, deformed into a ready-to-use configuration in which the arms of the U are no longer splayed.

EP-A-0233552 on the other hand discloses a flexible seal for application to a metal flange which is formed solely of a polymeric material having a central arched region and side webs to which double-sided adhesive tape is attached, the sides of the tape not connected to the side webs being protected by a masking film. This seal is folded by means of a robot over a mandrel and then rolled into position on the flange. There is no indication of how the seal is rolled into position and because of the self-adhesive side webs, this is very difficult to achieve and it is almost impossible accurately to locate the seal on the flange.

In US-A-4311747 there are disclosed an apparatus for, and a method of fitting onto a flange a generally U-shaped edge trim having a carrier located within a cover, the edge trim being in a first opened out condition in which the arms of the U diverge from the base of the U, wherein the edge trim is presented to the flange in its first condition in which it loosely engages the flange with its base located on the edge of the flange, the edge trim is then deformed into a second condition with the aid of a tool having a pair of crimping rollers mounted on a support arm for rotation in opposite directions about spaced parallel axes such that the peripheries of the rollers are spaced apart to define a gap of such predetermined distance as to enable them to apply pressure to the outer surfaces of the opened out edge trim gradually to deform the carrier and cover so that the edge trim grips the flange. Because the rollers are mounted so as to define a predetermined gap between their peripheries, the apparatus cannot be used satisfactorily for fitting splayed edge trims onto flanges of varying thickness.

In GB-A-1020026 a tool for use in fitting an edge trim strip to a flange is disclosed, the tool being hand-held and having limbs which engage the sides of the edge trim and a roller which engages the base thereof. In GB-A-1588213 several different embodiments of gasket installing devices are disclosed, all these devices having a first roller which bears against the base of the gasket, to push it onto the edge of a panel, and side guide rollers for guiding the device along the panel and/or for accommodating different thicknesses of gasket. Neither the tool nor the installing device perform any deformation step on the edge trim or gasket and in the case of the gasket there can be no question of any crimping taking place since the gasket is formed entirely of elastomeric material.

In GB-A-1588213, a gasket installing apparatus is disclosed for fitting a flexible elastic gasket onto an edge of a panel. The apparatus includes a correction roller assembly having a pair of opposed horizontal side rollers and a vertical central roller for embracing the gasket and aligning it on the panel edge (as shown in Figure 12). The side rollers may be biassed towards each other as shown in Figures 13-16. This apparatus is specifically designed for aligning gaskets on panel edges, but because of the presence of the spring biassed side rollers, could be used to apply force to the sides of the gasket, and deform the gasket. However, the apparatus is not designed for this purpose, and there is no suggestion that the apparatus can be used for crimping an edge trim (which is traditionally deformable due to the presence of a stiff, but deformable, carrier therein) into gripping engagement with a flange, which may be of non-uniform thickness, to grip the flange uniformly, regardless of the thickness of the flange. In fact, commercially available edge trims which incorporate stiff carriers therein could not be satisfactorily crimped into gripping engagement with a flange of non-uniform thickness using the apparatus disclosed in GB-A-1588213.

The apparatus of the present invention is specifically designed for crimping an edge trim, in which a stiff, but deformable carrier is located, onto a flange to grip the flange uniformly, regardless of the thickness of the flange.

Not one of the above described prior art documents in any way suggests how to apply an edge trim onto a flange which may be of uneven thickness in such a way that regardless of the thickness of the flange the edge trim will grip the flange uniformly throughout the length of the flange.

According to one aspect of the present invention, we provide a method of fitting a generally U-shaped edge trim having a deformable carrier located within a cover, onto a flange of variable thickness, the edge trim, prior to fitting, being in a first, opened out condition in which the arms of the U diverge from the base of the U and are splayed apart outwardly, comprising the steps of presenting the edge trim to the flange in its first condition, in which it loosely engages the flange, and the base of the U locates the opened out edge trim on the flange and subsequently crimping the edge trim into a second condition with the aid of a pair of crimping rollers mounted for rotation on a support arm about spaced, parallel axes, the arrangement being such that the rollers apply pressure to the outer surfaces of the opened out edge trim gradually to deform the carrier and cover so as to crimp the splayed apart arms into gripping engagement with the flange uniformly throughout its length, regardless of the thickness of the flange, and wherein a third roller is mounted on the support arm for rotation about an axis perpendicular to the parallel axes of the crimping rollers, the third roller extending across the gap between the spaced crimping rollers and being so located that it applies pressure to the outside of the base of the edge trim as it is being crimped onto the flange.

The method may include the step of sensing the thickness of the flange and applying a deforming step on the edge trim so that the edge trim will grip the flange uniformly throughout its length regardless of the thickness of the flange. Alternatively, the edge trim may be applied with a predetermined crimping force.

It is preferred that the edge trim has arms which are inclined to each other at an angle between about 10° and 90° and preferably at an angle of about 45°.

Preferably the cover is formed of an extruded synthetic resinous material which completely encloses the carrier which may be formed of slotted metal or of knitted wire as is well known in the art.

Preferably, the edge trim has a weatherstrip attached or integral therewith and is so shaped that it can be applied to the flange automatically by robotics, e.g. the support arm is robotically controlled.

Also according to the present invention, we provide crimping apparatus for carrying out the method described above, the apparatus comprising means movable relative to the strip or edge trim when the strip or edge trim is mounted on the flange, a pair of crimping rollers mounted for rotation on said means about parallel axes, respective rollers of the said pair of crimping rollers rotating, in use, in opposite directions, further means being provided such that the pair of crimping rollers apply pressure to the splayed-apart side walls of the strip or edge trim so as to close those side walls towards each other as the said means is moved along the length of the strip or edge trim on the flange, whereby the side walls of the strip or edge trim move into a subsequently retained configuration in which they are crimped into engagement with the flange to grip the flange uniformly regardless of the flange thickness, and wherein a third roller is mounted on the said means to be rotatable about an axis which is perpendicular to the parallel axes of the said pair of crimping rollers, the third roller being mounted so as to extend across the gap between the said pair of crimping rollers and to be so positioned in relation to the pair of crimping rollers that it applies pressure to the outside of the base of the channel-shaped strip or edge trim when it is mounted on the flange.

Preferably, the apparatus includes two pairs of crimping rollers mounted for rotation on the said means, respective rollers of each pair of crimping rollers being mounted with their peripheries spaced apart to define said gap.

Preferably also, the apparatus includes a tensioning roller and a guide roller, each mounted for rotation about an axis perpendicular to the parallel axes of the pair of crimping rollers, the axes of the guide and tensioning rollers being parallel to each other.

The further means may comprise a sensing device to ensure that the crimping rollers deform the side walls of the strip or edge trim so that the latter grips the flange uniformly regardless of its thickness.

The invention is now described by way of example with reference to the accompanying drawings, in which:-
FIGURE 1 shows an edge trim incorporating a weatherstrip and other sealing means applied to a flange but not in gripping engagement therewith;
FIGURE 2 shows the edge trim of Figure 1 after it has been deformed into gripping engagement with the flange, and
FIGURE 3 shows the edge trim of Figure 1 being applied to the flange and subsequently deformed into gripping engagement therewith with the aid of a robot arm.

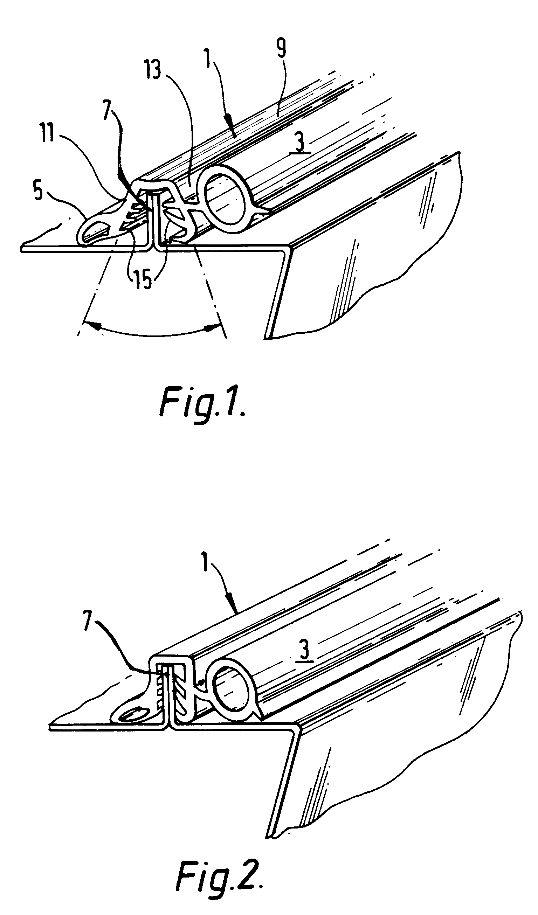

Referring to the drawing, the edge trim illustrated is of largely traditional construction with a metallic carrier (not shown) incorporated within a cover 1, there being a weatherstrip 3 attached to one portion of the edge trim and a further seal 5 attached to another portion thereof. A flange 7 to which the edge trim is to be applied is shown formed of two layers of metal comprising up-turned edge portions of two metal sheets forming part of the body of a motor vehicle and Figure 1 shows a generally U-shaped edge trim in a first condition with a base portion 9 of the edge trim overlying the outer edge of the flange 7 and two arms 11 and 13 of the edge trim diverging from the base of the U and subtending an angle of about 45° with each other and lying loosely one to either side of the flange 7. The flange 7 will normally vary in thickness.

The edge trim is shown provided with a plurality of gripper fins 15 of generally known construction but the number, shape and configuration of these is not important to the invention and they need not even be provided at all.

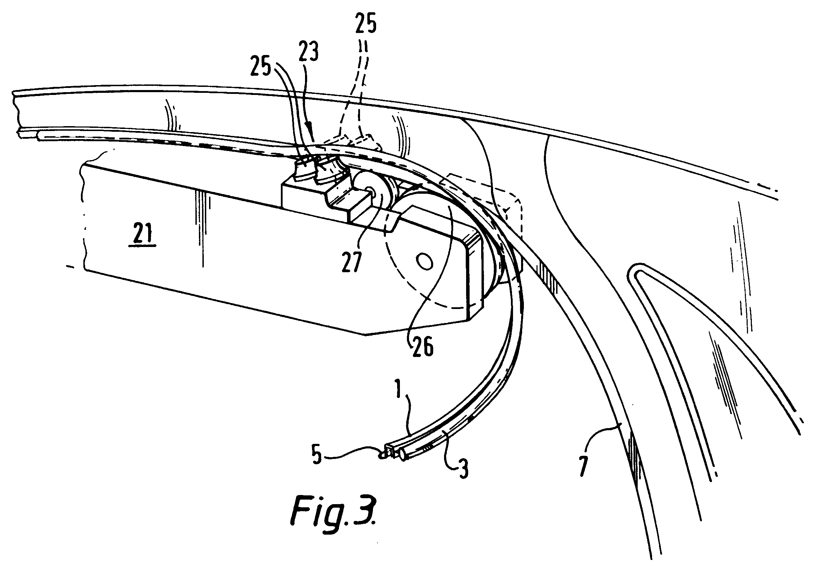

Figure 2 shows the edge trim of Figure 1 after it has been deformed from the condition shown in Figure 1 into gripping engagement with the flange 7. This deformation step is performed in accordance with the invention after the edge trim has been loosely applied to the flange 7 by the motor car manufacturer and one form of apparatus suitable for performing the task is shown in Figure 3. The apparatus includes a robot arm 21 on which a closing assembly 23 is mounted, the closing assembly incorporating two pairs of bevelled crimping rollers 25, at least one guide roller 26 and a tensioning roller 27 and some form of sensing device (not shown) to ensure that the crimping rollers deform the arms 11 and 13 of the edge trim so that the edge trim grips the flange uniformly regardless of the thickness of the flange. This may either sense flange thickness and cause crimping by the appropriate amount, or ensure a uniform crimping force of the edge trim on the flange.

It will of course be appreciated that the edge trim could have many other constructions from that illustrated; for example, it need not have any weatherstrip or seal attached to or integral therewith and it could be an extruded edge trim having a metal carrier within a synthetic resinous body. Alternatively, the body could be formed of textile material wrapped around a carrier. Many other constructions are possible.

Figure 1 shows the arms 11 and 13 of the edge trim inclined to each other at an angle of about 45°, this being the preferred angle, and the state in which it is envisaged the manufacturer of the edge trim would supply it to the car manufacturer. It will be appreciated, however, that other angles would be possible although ideally the angle should be somewhere between a few degrees and 90°. It is even envisaged that the edge trim could be supplied to the motor manufacturer in flat form and the manufacturer could then either apply the edge trim to the flange and crimp it up to the construction shown in Figure 2 in a single operation or initially deform the edge trim to a condition similar to that shown in Figure 1 and then apply it to the flange and subsequently deform it again to the condition shown in Figure 2.

It will also be appreciated that the method and apparatus for deforming the edge trim illustrated in Figure 3 is only one example of many different methods and apparatus which could be used.

It will of course be appreciated that while the present invention has been specifically conceived for edge trims for use in the motor industry, it could be used for edge trims having other uses.

The advantage of the present invention is that it solves a problem which motor manufacturers in particular have suffered from for many years, namely, the satisfactory fitting of an edge trim or weatherstrip on a flange of variable thickness on a vehicle and that it is now possible to ensure that the weatherstrip is fitted with a uniform grip on the flange regardless of the dimensions of the flange.

It will of course be understood that the present invention has been described above purely by way of example, and modifications of detail can be made within the scope of the invention as defined bythe claims.

## Claims

1. A method of fitting a generally U-shaped edge trim (1) having a deformable carrier (not shown in the drawings of the present patent) located within a cover, onto a flange (7) of variable thickness, the edge trim, prior to fitting, being in a first, opened out condition (Fig.1) in which the arms (11,13) of the U diverge from the base (9) of the U and are splayed apart outwardly, comprising the steps of presenting the edge trim to the flange (7) in its first condition (Fig.1), in which it loosely engages the flange, and the base (9) of the U locates the opened out edge trim on the flange (7), and subsequently crimping the edge trim into a second condition with the aid of a pair of crimping rollers (25) mounted for rotation on a support arm (21) about spaced, parallel axes, the arrangement being such that the rollers (25) apply pressure to the outer surfaces of the opened out edge trim (1) gradually to deform the carrier and cover so as to crimp the splayed apart arms (11.13) into gripping engagement with the flange (7) uniformly throughout its length regardless of the thickness of the flange (7), and wherein a third roller (27) is mounted on the support arm (21) for rotation about an axis perpendicular to the parallel axes of the crimping rollers (25), the third roller (27) extending across the gap between the spaced crimping rollers (25) and being so located that it applies pressure to the outside of the base of the edge trim (1) as it is being crimped onto the flange (7).

2. A method according to claim 1 which includes the step of sensing the thickness of the flange (7) and applying a deforming step on the edge trim (1) so that the edge trim (1) will grip the flange (7) uniformly throughout its length regardless of the thickness of the flange.

3. A method according to claim 1 in which a predetermined crimping force is applied to the edge trim (1) to deform it into its second condition (Fig.2), regardless of the thickness of the flange.

4. A method according to claim 1, 2 or 3 wherein the edge trim (1) is deformed by means of a two pairs of spaced crimping rollers (25).

5. A method according to any one of claims 1-4 wherein the rollers (25,27) are supported on a robot arm (21).

6. A method according to any one of claims 1-5 wherein the third roller (27) is positioned forward of the pair of rollers (25) and including a guide roller (26) mounted for rotation about an axis parallel to that of the third roller (27) and spaced therefrom, the guide roller (26) guiding the edge trim (1) onto the flange (7).

7. Crimping apparatus for carrying out the method of claim 1, the apparatus comprising means (21) movable relative to the strip or edge trim (1) when the strip or edge trim (1) is mounted on the flange, a pair of crimping rollers (25) mounted for rotation on said means (21) about parallel axes, respective rollers of the said pair of crimping rollers (25) rotating, in use, in opposite directions, further means being provided such that the pair of crimping rollers (25) apply pressure to the splayed-apart side walls (11,13) of the strip or edge trim (1) so as to close those side walls (11,13) towards each other as the said means (21) is moved along the length of the strip or edge trim (1) on the flange (7), whereby the side walls (11,13) of the strip or edge trim (1) move into a subsequently retained configuration in which they are crimped into engagement with the flange (Fig.2) to grip the flange uniformly regardless of the flange thickness, and wherein a third roller (27) is mounted on the said means (21) to be rotatable about an axis which is perpendicular to the parallel axes of the said pair of crimping rollers (25), the third roller (27) being mounted so as to extend across the gap between the said pair of crimping rollers (25) and to be so positioned in relation to the pair of crimping rollers (25) that it applies pressure to the outside of the base (9) of the channel-shaped strip or edge trim (1) when it is mounted on the flange (7).

8. Apparatus according to claim 7 including two pairs of crimping rollers (25) mounted for rotation on the said means (21), respective rollers of each pair of crimping rollers (25) being mounted with their peripheries spaced apart to define said gap.

9. Apparatus according to claim 7 or 8 including a tensioning roller (27) and a guide roller (26), each mounted for rotation about an axis perpendicular to the parallel axes of the pair of crimping rollers (25), the axes of the guide and tensioning rollers (26,27) being parallel to each other, and the tensioning roller (27) being positioned forward to the said pair of rollers (25) in the direction of movement of the said means (21)..

10. Apparatus according to claim 7,8 or 9 wherein said means (21) is a robot arm.

11. Apparatus according to any one of claims 7-10 in which the crimping rollers (25) are bevelled.

12. Apparatus according to any one of claims 7-11 wherein the further means comprises a sensing device to ensure that the crimping rollers (25) deform the side walls (11,13) of the strip or edge trim (1) so that the latter grips the flange (7) uniformly regardless of its thickness.

13. Apparatus according to claim 7, 8 or 9 including support means (26) for receiving a length of the said strip or edge trim (1) with its said side walls (11,13) in the initially splayed-apart configuration (Fig.1) from a supply thereof, the support means (26) supporting and guiding the said length (1) onto the flange (7).

## Patentansprüche

1. Verfahren zum Anbringen einer allgemein U-förmigen Kantenverkleidung (1) mit einem verformbaren Träger (in den Zeichnungen des vorliegenden Patents nicht gezeigt), der innerhalb einer Umhüllung angeordnet ist, an einem Flansch (7) variabler Dicke, wobei die Kantenverkleidung vor dem Anbringen in einem ersten, ausgebreiteten Zustand (Fig. 1) ist, in dem die Arme (11,13) des U vom Grundteil (9) des U auseinanderstreben und nach außen voneinander weggespreizt sind, das die Schritte aufweist, die Kantenverkleidung dem Flansch (7) in dessen ersten Zustand (Fig. 1) darzubieten, in dem er lose am Flansch angreift und der Grundteil (9) des U die ausgebreitete Kantenverkleidung am Flansch (7) lokalisiert, und anschließend die Kantenverkleidung in einen zweiten Zustand mit Hilfe eines Paars von Bördelrollen (25) zu bördeln, die an einem Tragarm (21) um beabstandete parallele Achsen für Rotation angebracht sind, wobei die Anordnung so ist, daß die Rollen (25) Druck auf die äußeren Oberflächen der ausgebreiteten Kantenverkleidung (1) ausüben, um ällmählich den Träger und die Umhüllung zu deformieren, so daß die auseinandergespreizten Arme (11,13) in festklemmenden Eingriff mit dem Flansch (7) gleichförmig über dessen Länge unabhängig von der Dicke des Flansches (7) gebördelt werden, und wobei eine dritte Rolle (27) an dem Tragarm (21) für Drehung um eine Achse senkrecht zu den parallelen Achsen der Bördelrollen (25) befestigt ist, wobei sich die dritte Rolle (27) über den Zwischenraum zwischen den beabstandeten Bördelrollen (25) erstreckt und so angeordnet ist, daß sie Druck auf die Außenseite des Grundteiles der Kantenverkleidung (1) ausübt, während diese auf den Flansch (7) aufgebördelt wird.

2. Verfahren nach Anspruch 1, das den Schritt aufweist, die Dicke des Flansches (7) zu erfühlen und einen Verformungsschritt auf die Kantenverkleidung (1) auszuüben, so daß sich die Kantenverkleidung (1) am Flansch (7) gleichförmig über ihre Länge unabhängig von der Dicke des Flansches festklemmt.

3. Verfahren nach Anspruch 1, bei dem eine vorbestimmte Bördelkraft auf die Kantenverkleidung (1) angewendet wird, um sie in ihren zweiten Zustand (Fig. 2) unabhängig von der Dicke des Flansches zu deformieren.

4. Verfahren nach Anspruch 1, 2 oder 3, bei dem die Kantenverkleidung (1) mit Hilfe von zwei Paaren von beabstandeten Bördelrollen (25) deformiert wird.

5. Verfahren nach einem der Ansprüche 1 bis 4, bei dem die Rollen (25,27) durch einen Roboterarm (21) getragen sind.

6. Verfahren nach einem der Ansprüche 1 bis 5, bei dem die dritte Rolle (27) vor dem Paar von Rollen (25) angeordnet ist und eine Führungsrolle (26) einschließt, die für Drehung um eine Achse angebracht ist, die parallel zu derjenigen der dritten Rolle (27) ist und von derselben einen Abstand aufweist, wobei die Führungsrolle (26) die Kantenverkleidung (1) auf den Flansch (7) führt.

7. Bördelvorrichtung zum Ausführen des Verfahrens von Anspruch 1, wobei die Vorrichtung ein Mittel (21), das relativ zum Streifen, zur Leiste oder zur Kantenverkleidung (1) bewegbar ist, wenn der Streifen oder die Kantenverkleidung (1) auf dem Flansch montiert wird, und ein Paar von Bördelrollen (25) aufweist, die für Drehung auf dem Mittel (21) um parallele Achsen befestigt sind, wobei entsprechende Rollen des Paares von Bördelrollen (25) bei der Benutzung in entgegengesetzten Richtungen rotieren, wobei weiter ein Mittel vorgesehen ist, so daß das Paar von Bördelrollen (25) Druck auf die auseinandergespreizten Seitenwände (11,13) des Streifens oder der Kantenverkleidung (1) ausübt, um so diese Seitenwände (11,13) aufeinanderzu zu schließen, wenn das Mittel (21) entlang der Längenausdehnung des Streifens oder der Kantenverkleidung (1) auf dem Flansch (7) bewegt wird, wodurch die Seitenwände (11,13) des Streifens oder der Kantenverkleidung (1) sich in eine anschließend beibehaltene Anordnung bewegen, in der sie in Eingriff mit dem Flansch (Fig. 2) gebördelt sind, um sich am Flansch unabhängig von der Flanschdicke gleichförmig festzuklemmen, und wobei eine dritte Rolle (27) an dem Mittel (21) angebracht ist, um um eine Achse drehbar zu sein, die senkrecht zu den parallelen Achsen des Paares von Bördelrollen (25) ist, wobei die dritte Rolle (27) so angebracht ist, daß sie sich über den Zwischenraum zwischen dem Paar von Bördelrollen (25) erstreckt und so in bezug auf das Paar von Bördelrollen (25) positioniert ist, daß sie Druck auf die Außenseite des Grundteils (9) des kanalförmigen Streifens oder der Kantenverkleidung (1) ausübt, wenn dieser bzw. diese am Flansch (7) angebracht wird.

8. Vorrichtung nach Anspruch 7, die zwei Paare von Bördelrollen (25) aufweist, die für Drehung an dem Mittel (21) angebracht sind, wobei entsprechende Rollen jedes Paars von Bördelrollen (25) so angebracht ist, daß ihre Umfangsflächen einen Abstand aufweisen, um den Zwischenraum zu begrenzen.

9. Vorrichtung nach Anspruch 7 oder 8, die eine spannende Rolle (27) und eine Führungsrolle (26) aufweist, die jeweils für Drehung um eine Achse angebracht sind, die senkrecht ist zu den parallelen Achsen des Paares von Bördelrollen (25), wobei die Achsen der Führungsrolle und spannenden Rolle (26,27) parallel zueinander sind und die spannende Rolle (27) vor dem Paar von Rollen (25) in Richtung der Bewegung des Mittels (21) angeordnet ist.

10. Vorrichtung nach Anspruch 7, 8 oder 9, dadurch gekennzeichnet, daß das Mittel (21) ein Roboterarm ist.

11. Vorrichtung nach einem der Ansprüche 7 bis 10, bei dem die Bördelrollen (25) abgeschrägt sind.

12. Vorrichtung nach einem der Ansprüche 7 bis 11, bei dem das weitere Mittel eine Fühlereinrichtung aufweist, um sicherzustellen, daß die Bördelrollen (25) die Seitenwände (11,13) des Streifens oder der Kantenverkleidung (1) so deformieren, daß sich derselbe bzw. dieselbe am Flansch (7) gleichförmig unabhängig von dessen Dicke festklemmt.

13. Vorrichtung nach Anspruch 7, 8 oder 9, die Tragmittel (26) zum Aufnehmen einer Länge des Streifens oder der Kantenverkleidung (1), wobei sich deren Seitenwände (11,13) in der ursprünglich auseinandergespreizten Anordnung (Fig. 1) befinden, von einer Zuführung derselben aufweist, wobei das Tragmittel (26) die Länge (1) trägt und auf den Flansch (7) führt.

## Revendications

1. Procédé de montage d'une moulure de protection (1) de forme générale en U ayant un support déformable (non représenté sur les dessins du présent brevet) disposé dans un capot, sur un rebord (7) d'épaisseur variable, la moulure de protection, avant montage, étant dans un premier état ouvert (figure 1) dans lequel les bras (11, 13) du U divergent de la base (9) du U et sont écartés vers l'extérieur, comportant les étapes de présentation de la moulure de protection sur le rebord (7) dans son premier état (figure 1), dans lequel elle engage de façon lâche le rebord, et la base (9) du U positionne la moulure de protection ouverte sur le rebord (7), et sertissage ensuite de la moulure de protection dans un deuxième état à l'aide d'une paire de galets de sertissage (25) montés pour une rotation sur un bras de support (21) autour d'axes parallèles espacés, l'agencement étant tel que les galets (25) appliquent d'une manière progressive une pression sur les surfaces extérieures de la moulure de protection ouverte (1) afin de déformer le support et le capot de façon à sertir les bras écartés (11, 13) en engagement de serrage avec le rebord (7) d'une façon uniforme sur sa longueur indépendamment de l'épaisseur du rebord (7), et dans lequel un troisième galet (27) est monté sur le bras de support (21) pour une rotation autour d'un axe perpendiculaire aux axes parallèles des galets de sertissage (25), le troisième galet (27) s'étendant en travers de l'espace entre les galets de sertissage espacés (25) et étant disposé de telle sorte qu'il applique une pression sur l'extérieur de la base de la moulure de protection (1) lorsqu'elle est sertie sur le rebord (7).

2. Procédé selon la revendication 1, qui comprend l'étape de détection de l'épaisseur du rebord (7) et une étape de déformation de la moulure de protection (1) de telle sorte que la moulure de protection (1) serre le rebord (7) d'une façon uniforme sur sa longueur indépendamment de l'épaisseur du rebord.

3. Procédé selon la revendication 1, dans lequel une force de sertissage prédéterminée est appliquée sur la moulure de protection (1) afin de la déformer dans son deuxième état (figure 2) indépendamment de l'épaisseur du rebord.

4. Procédé selon la revendication 1, 2 ou 3, dans lequel la moulure de protection (1) est déformée au moyen de deux paires de galets de sertissage (25) espaces.

5. Procédé selon l'une quelconque des revendications 1 à 4, dans lequel les galets (25, 27) sont supportés par un bras de robot (21).

6. Procédé selon l'une quelconque des revendications 1 à 5, dans lequel le troisième galet (27) est positionné à l'avant de la paire de galets (25) et comprend un galet de guidage (26) monté pour une rotation autour d'un axe parallèle à celui du troisième galet (27) et espacé de celui-ci, le galet de guidage (26) guidant la moulure de protection (1) sur le rebord (7).

7. Appareil de sertissage destiné à mettre en oeuvre le procédé de la revendication 1, l'appareil comportant des moyens (21) mobiles par rapport à la baguette ou moulure de protection (1) lorsque la baguette ou moulure de protection (1) est montée sur le rebord, une paire de galets de sertissage (25) montés pour une rotation sur lesdits moyens (21) autour d'axes parallèles, les galets respectifs de ladite paire de galets de sertissage (25) tournant lors de l'utilisation dans des sens opposés, d'autres moyens étant prévus de telle sorte que la paire des galets de sertissage (25) applique une pression sur les parois latérales écartées (11, 13) de la baguette ou moulure de protection (1) de façon à rapprocher l'une de l'autre ces parois latérales (11, 13) lorsque lesdits moyens (21) sont déplacés sur la longueur de la baguette ou moulure de protection (1) sur le rebord (7), les parois latérales (11, 13) de la baguette ou moulure de protection (1) se déplaçant dans une configuration sensiblement retenue dans laquelle elles sont serties en engagement avec le rebord (7) (figure 2) afin de serrer le rebord d'une façon uniforme indépendamment de l'épaisseur du rebord, et dans lequel un troisième galet (27) est monté sur lesdits moyens (21) afin de pouvoir tourner autour d'un axe qui est perpendiculaire aux axes parallèles de ladite paire de galets de sertissage (25), le troisième galet (27) étant monté de façon à s'étendre en travers de l'espace entre ladite paire de galets de sertissage (25) et de façon à être positionné par rapport à la paire de galets de sertissage (25) de telle sorte qu'il applique une pression sur l'extérieur de la base (9) de la baguette ou moulure de protection profilée en U (1) lorsqu'elle est montée sur le rebord (7).

8. Appareil selon la revendication 7, comprenant deux paires de galets de sertissage (25) montés pour une rotation sur lesdits moyens (21), des galets respectifs de chaque paire de galets de sertissage (25) étant montés avec leurs périphéries espacées afin de définir ledit espace.

9. Appareil selon la revendication 7 ou 8, comprenant un galet de tension (27) et un galet de guidage (26), montés chacun pour une rotation autour d'un axe perpendiculaire aux axes parallèles de la paire de galets de sertissage (25), les axes des galets de guidage et de tension (26, 27) étant parallèles l'un à l'autre, et le galet de tension (27) étant positionné en avant de ladite paire de galets (25) dans la direction de déplacement desdits moyens (21).

10. Appareil selon la revendication 7, 8 ou 9, dans lequel lesdits moyens (21) sont constitués par un bras de robot.

11. Appareil selon l'une quelconque des revendications 7 à 10, dans lequel les galets de sertissage (25) sont biseautés.

12. Appareil selon l'une quelconque des revendications 7 à 11, dans lequel les autres moyens comportent un dispositif de détection destiné à s'assurer que les galets de sertissage (25) déforment les parois latérales (11, 13) de la baguette ou moulure de protection (1) de telle sorte que cette dernière serre le rebord (7) d'une façon uniforme indépendamment de son épaisseur.

13. Appareil selon la revendication 7, 8 ou 9, comprenant des moyens de support (26) destinés à recevoir d'une alimentation une longueur de ladite baguette ou moulure de protection (1) avec ses parois latérales (11, 13) dans la configuration initialement écartée (figure 1), les moyens de support (26) supportant et guidant ladite longueur (1) sur le rebord (7).
